# EUROPÄISCHE PATENTSCHRIFT

(11) **EP 3 257 711 B1**
(45) Veröffentlichungstag und Bekanntmachung des Hinweises auf die Patenterteilung: **07.10.2020**
(21) Anmeldenummer: 16465513.6
(22) Anmeldetag: 15.06.2016
(51) Int. Cl.: B60T 7/12, B60T 7/22

(54) **VERFAHREN ZUR UNFALLFOLGENMINIMIERUNG**
METHOD FOR MINIMIZING ACCIDENT CONSEQUENCES
PROCEDE DE REDUCTION DES SUITES D'ACCIDENT

(43) Veröffentlichungstag der Anmeldung: 20.12.2017
(73) Patentinhaber: Continental Automotive GmbH, 30165 Hannover (DE)
(72) Erfinder: Homutescu, Adrian, 700013 Iasi (RO); Oancea, Iulian, 700443 Iasi (RO); Ruginosu, Daniel, 700543 Iasi (RO)
(74) Vertreter: Büchner, Jörg

(56) Entgegenhaltungen:
- WO-A1-2014/048530
- US-A1- 2013 054 103

## Beschreibung

Die Erfindung betrifft ein Verfahren zur Unfallfolgenminimierung gemäß dem Oberbegriff von Anspruch 1.

Aus der WO 2008/131982 A1 ist ein Verfahren bekannt, bei welchem nach Auslösung eines automatischen Bremseingriffs durch ein Fahrzeugsicherheitssystem unter Anwendung eines Modells für die Annäherung eines hypothetischen Folgefahrzeugs eine Bedingung für das Lösen der Bremsen ermittelt wird und bei Eintritt dieser Bedingung die Bremse wenigstens teilweise gelöst wird, um einen Auffahrunfall des 2., auffahrenden Fahrzeugs zu verhindern bzw. die Schwere dieses Aufpralls zu begrenzen. Ein solcher automatischer Bremseingriff wird auf Basis von Signal von Umfeldsensoren, ermittelte Abstände und Annäherungsgeschwindigkeiten vom Fahrzeugsicherheitssystem ausgelöst bzw. auch wieder deaktiviert.

Aus der WO 2010/0 49 129 A1 ist darüber hinaus ein Verfahren und Steuergerät zum Abbremsen eines Fahrzeugs nach einer Kollision bekannt, welches zur Vermeidung von Sekundärunfällen einen sogenannten "Post Crash Brake", also eine automatische Abbremsung des Fahrzeugs nach erfolgter Primärkollision durchführt.

Aus der US 2013 054103 A1 ist ein Verfahren bekannt, welches zur Minimierung der Unfallfolge einer Heckkollision die Bremse eines bremsenden Fahrzeugs teilweise löst und danach wieder aktiviert.

Ein Verfahren zur automatischen Bremsaktivierung bei einer drohenden Heckkollision wird in der WO 2014/048530 A1 beschrieben.

Zunehmend werden Fahrzeuge auch mit einer elektronischen Parkbremse ausgestattet, welche bei stehendem Fahrzeug automatisch aktiv wird und neben der eigentlichen Parkbremsfunktion auch als Anfahrhilfe , insbesondere beim anfahren am Berg dienen kann.

Die Aufgabe der vorliegenden Erfindung ist es, die Sicherheit im Straßenverkehr weiter zu erhöhen und Unfallfolgen weiter zu minimieren. Diese Aufgabe wird durch die Merkmale der unabhängigen Ansprüche gelöst. Vorteilhafte Weiterbildungen der Erfindung ergeben sich aus den Unteransprüchen.

Ein wesentlicher Gedanke der Erfindung besteht darin, dass in einer zweiten Phase bei Vorliegen einer zweiten Bedingung die Bremsung des ersten Fahrzeugs zumindest teilweise wieder aktiviert wird, d.h. wieder zumindest teilweise gebremst wird bis hin zur Aktivierung der Parkbremse und Rückführung des Fahrzeugs bis in den Stand.

Die Erfindung wird nachfolgend anhand von Ausführungsbeispielen und einer Figur näher beschrieben.

Die Figur skizziert ein 1., gebremstes und im vorliegenden Fall sogar stehendes Fahrzeug 1 mit aktivierter Parkbremse, auf welches ein 2. Fahrzeug 2 aufzufahren droht bzw. auffährt. Für sich noch im Fahrbetrieb befindliche und durch eine automatische Bremsung gebremste Fahrzeuge bekannt ist an sich dabei nun, in einer ersten Phase bei Vorliegen zumindest einer ersten Bedingung die Bremsung des ersten Fahrzeugs zumindest teilweise gelöst wird, um einen Auffahrunfall zu verhindern oder dessen Schwere zu begrenzen.

Eine Übertragung auf ein stehendes, ausschließlich durch eine Parkbremse gebremstes Fahrzeug ist jedoch nicht bekannt.

Durch dieses zumindest teilweise Lösen der Bremsen kann jedoch der Schaden durch den Aufprall des 2. Fahrzeugs auf das 1. Fahrzeug letztlich für beide Fahrzeuge reduziert werden. Was dabei jedoch bisher nicht berücksichtigt wurde, ist die Fortbewegung des 1. Fahrzeugs in der Folge dieses Aufpralls.

Daher wird vorgesehen, dass in einer zweiten Phase bei Vorliegen einer zweiten Bedingung die Bremsung des ersten Fahrzeugs zumindest teilweise wieder aktiviert wird. Dies unterscheidet sich auch von den sogenannten Post Crash Brake Eingriffen dadurch, dass letztere nicht von einer vorausgehenden 1. Phase des Bremseingriff ausgehen und auch nicht das Reaktivieren der elektronischen Parkbremse einbeziehen.

So ist das erste, bremsende Fahrzeug ein geparktes Fahrzeug mit aktiver Parkbremse bzw. wird das Verfahren erfindungsgemäß auf ein solches Fahrzeug und die elektronische Parkbremse angewendet, wobei die Parkbremse in der ersten Phase zumindest teilweise gelöst und in der zweiten Phase wieder reaktiviert wird. Die zweite Bedingung für ein Reaktivieren der Bremse ist vorzugsweise der Ablauf eines vorgegebenen Zeitintervalls, welches startend von dem Lösen der Bremse in der ersten Phase oder einem erfolgten Aufprall des zweiten Fahrzeugs aus bestimmt wird, also beispielsweise 1 Sekunde nach dem Primäraufprall. Durch diese Verzögerung wird sichergestellt, dass einerseits eine hinreichende Menge an Impulsenergie des 2., auffahrenden Fahrzeugs ohne größere Deformation der beiden Fahrzeuge weitergegeben werden kann und andererseits noch hinreichend früh die Bremsung wieder aktiviert wird, um weitere Folgeunfälle, beispielsweise das Auffahren auf ein 3., vor dem 1. befindliche Fahrzeug zu vermeiden.

Vorzugsweise ist die zweite Bedingung auch das Vorliegen eines Hindernisses in der Bewegungsrichtung des ersten Fahrzeugs oder wird Länge des Zeitintervalls entsprechend durch den Abstand zum Hindernis angepasst.

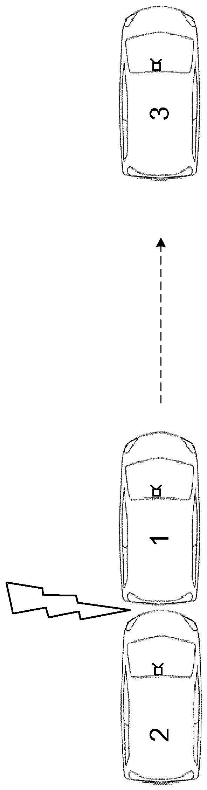

Zur Durchführung dieses Verfahrens muss das hier in dieser Figur 1. Fahrzeug 1 mit einem entsprechenden Steuergerät mit einem Algorithmus zur Durchführung des Verfahrens ausgestattet sein und wird auch dessen elektronische Parkbremse entsprechend steuern, um letztlich auch die Schäden am eigenen Fahrzeug aufgrund des Aufpralls des 2. Fahrzeugs zu reduzieren, andererseits Schäden durch einen Folgeunfall auf ein Hindernis wie beispielsweise das 3. Fahrzeug zu vermeiden oder zu reduzieren.

## Patentansprüche

1. Verfahren zur Unfallfolgenminimierung mit einem ersten, bremsenden Fahrzeug i (1) und einem zweiten, auf das erste auffahrenden Fahrzeug (2), wobei in einer ersten Phase bei Vorliegen zumindest einer ersten Bedingung die Bremsung des ersten Fahrzeugs zumindest teilweise gelöst wird, um einen Auffahrunfall zu verhindern oder dessen Schwere zu begrenzen, wobei in einer zweiten Phase bei Vorliegen einer zweiten Bedingung die Bremsung des ersten Fahrzeugs zumindest teilweise wieder aktiviert wird,
**dadurch gekennzeichnet, dass** das erste, bremsende Fahrzeug ein geparktes Fahrzeug mit aktiver Parkbremse ist, wobei die Parkbremse in der ersten Phase zumindest teilweise gelöst und in der zweiten Phase wieder reaktiviert wird.

2. Verfahren nach einem der vorangehenden Ansprüche, **dadurch gekennzeichnet, dass** die zweite Bedingung ein Ablauf eines vorgegebenen Zeitintervalls ist, welches startend von dem Lösen der Bremse in der ersten Phase oder einem erfolgten Aufprall des zweiten Fahrzeugs aus bestimmt wird.

3. Verfahren nach einem der vorangehenden Ansprüche, **dadurch gekennzeichnet, dass** die zweite Bedingung das Vorliegen eines Hindernisses in der Bewegungsrichtung des ersten Fahrzeugs ist.

4. Steuergerät für ein Kraftfahrzeug mit einem Algorithmus zur Durchführung des Verfahrens nach einem der vorangehenden Ansprüche, zur Deaktivierung einer Parkbremse in der 1. Phase und Reaktivierung in der 2. Phase.

## Claims

1. A method for minimizing accident consequences with a first, braking vehicle and a second vehicle (2) approaching the first,
wherein, in a first phase, if at least a first condition is present, the braking of the first vehicle is at least partially released to prevent a collision or at least to limit the severity thereof, wherein, in a second phase, if a second condition is present, the braking of the first vehicle is at least partially reactivated,
**characterized in that** the first, braking vehicle is a parked vehicle with an active parking brake, wherein the parking brake is at least partially released in the first phase and reactivated in the second phase.

2. The method according to any one of the preceding claims, **characterized in that** the second condition is the expiration of a predetermined time interval which is determined starting from the release of the brake in the first phase or from an impact of the second vehicle having occurred.

3. The method according to any one of the preceding claims, **characterized in that** the second condition is the presence of an obstacle in the direction of movement of the first vehicle.

4. A control device for a motor vehicle with an algorithm for performing the method according to any one of the preceding claims for deactivation of a parking brake in the 1^{st} phase and reactivation in the 2^{nd} phase.

## Revendications

1. Procédé de réduction des suites d'accident avec un premier véhicule freinant (1) et un deuxième véhicule (2) sur le point de heurter le premier,
dans lequel, dans une première phase, lors de la présence d'au moins une première condition, le freinage du premier véhicule est au moins partiellement désactivé afin d'empêcher une collision ou de limiter sa sévérité,
dans lequel, dans une deuxième phase, lors de la présence d'une deuxième condition, le freinage du premier véhicule est au moins partiellement réactivé,
**caractérisé en ce que** le premier véhicule freinant est un véhicule en stationnement avec un frein de stationnement actif, le frein de stationnement étant au moins partiellement désactivé dans la première phase et réactivé dans la deuxième phase.

2. Procédé selon l'une quelconque des revendications précédentes, **caractérisé en ce que** la deuxième condition est un écoulement d'un intervalle de temps prédéfini, qui est déterminé en partant de la désactivation du frein dans la première phase ou de l'occurrence d'un choc avec le deuxième véhicule.

3. Procédé selon l'une quelconque des revendications précédentes, **caractérisé en ce que** la deuxième condition est la présence d'un obstacle dans la direction de déplacement du premier véhicule.

4. Appareil de commande pour un véhicule automobile comprenant un algorithme pour la réalisation du procédé selon l'une quelconque des revendications précédentes, pour la désactivation d'un frein de stationnement dans la première phase et la réactivation dans la deuxième phase.
